# EUROPEAN PATENT APPLICATION

(11) **EP 2 811 464 A1**
(43) Date of publication of application: **10.12.2014**
(21) Application number: 13196756.4
(22) Date of filing: 11.12.2013
(51) Int. Cl.: G06T 19/00

(54) **Augmented reality system and method**

(30) Priority: 11.12.2012 GB 201222294
(71) Applicant: Holition Limited, London EC1N 2PL (GB)
(72) Inventor: Freeman, Russell, London, EC1N 2PL (GB)
(74) Representative: Lam, Alvin

(57) **Abstract**

An augmented reality system is described for providing a user with a facility to try out virtual clothing or accessories. The system comprises a database storing data defining at least one augmented reality object and a set of associated audio clips, each audio clip in the set corresponding to a different characteristic, trait or parameter of an associated augmented reality object, a camera for imaging a scene containing the user, logic for detecting the motion of a feature within the scene, a display device for displaying an image of the scene in which an augmented reality object is superimposed, an audio processing module for selecting an audio clip associated with the superimposed augmented reality object, and an audio device for playing a sound associated with the augmented reality object, wherein the sound is varied in accordance with the detected motion.

## Description

### Field of the Invention

The present invention relates to an augmented reality system and method. Embodiments of the invention relate to an augmented reality system and method in which sounds are played to a user in association with the display of an augmented reality image.

### Background of the Invention

A prospective purchaser of clothing or accessories may wish to see how those clothing or accessories would look on them before making a purchase. Physically trying on clothes and accessories can be time consuming, and furthermore it is only possible to try out items actually stocked in store. It is therefore desirable to provide a system for permitting a user to see whether clothing or accessories would suit them without physically trying on the footwear. An augmented reality system in which a captured video image of a customer is combined with a virtual item of clothing or accessory in real time can be beneficial in this regard. It is desirable that such a system is able to track a user's movements, and to provide as realistic an experience as possible.

### Summary of the Invention

Aspects of the present invention are set out in the accompanying claims.

According to one aspect, the present invention provides an augmented reality system for providing a user with a facility to try out virtual clothing or accessories, the system comprising a database storing data defining at least one augmented reality object and a set of associated audio clips, each audio clip in the set corresponding to a different characteristic, trait or parameter of an associated augmented reality object; camera means for imaging a scene containing the user; means for detecting the motion of a feature within the scene; means for displaying an image of the scene in which an augmented reality object is superimposed; audio processing means for selecting at least one audio clip associated with the superimposed augmented reality object; and means for outputting a sound associated with the augmented reality object, wherein the sound is varied in accordance with the detected motion.

The system may receive a user input selection of an augmented reality object to be superimposed, and at least one associated characteristic, trait or parameter of the augmented reality object. At least one audio clip may be selected in dependence on the user input selection. The selected audio clip may be varied in accordance with the detected motion. Each audio clip in the set may corresponds to a different parameter of detected motion.

According to another aspect, there may be provided an augmented reality system for providing a user with a facility to try out virtual clothing or accessories, the system comprising: a camera for imaging a scene containing the user; logic for detecting the motion of a feature within the scene; a display device for displaying an image of the scene in which an augmented reality object is superimposed; and an audio device for playing a sound associated with the augmented reality object, wherein the sound is varied in accordance with the detected motion.

As a result, the user's experience is richer, because it includes an audio component which may be directly related to the user's interaction with the augmented reality object.

The feature may be a trackable marker moveable by the user, and the augmented reality object may be superimposed at the position of the trackable marker. The trackable marker may be held by the user, or worn by the user. In this way, when the user moves the trackable marker, a sound associated with the augmented reality object superimposed at the position of the trackable marker will be played. The sound may be played at a volume which is varied in dependence on a distance between the trackable marker and the user's head. In this way, the sound may be made louder when the trackable marker (and thus the augmented reality object) are held closer to the user's head.

Alternatively, the feature in relation to which velocity is tracked may be the user's head, and the augmented reality object may be superimposed on or near the user's head. The augmented reality object may forn instance be a hat, or earrings, which will make a sound based on the user moving their head. In some embodiments, the velocity of the head movements will influence the characteristics of the sound played. The detected motion may comprise one or both of a rotational velocity of the user's head and a linear velocity of the user's head.

In another embodiment, the feature may be one or a group of node points within a skeleton model representing at least part of the user's body, and the augmented reality object may be an item of clothing superimposed over the user's body. In this case, the detected motion may comprise one or both of the rotational and linear velocity of one node point with respect to another node point. At least some of the node points may represent the user's joints. The sound may be varied in dependence on the proximity of the node point feature to another node point, or to a vector joining two node points.

A first vector may join a first node and a second node within the skeleton model and a second vector joins the second node and a third node within the skeleton model, and the detected movement may comprise a rotational velocity defined by a rate of change of the angle between the first and second vectors.

The volume of the sound may be higher when the angle between the first and second vectors is less than a predetermined value than when the angle between the first and second vectors is greater than the predetermined value.

In one embodiment, a first vector joins a first node and a second node within the skeleton model and a second vector joins the second node and a third node within the skeleton model, and the sound is played when both the angle between the first and second vectors is greater than a predetermined value and the detected movement is above a predetermined amount.

In one embodiment a database of items of clothing and/or accessories is provided, each item having associated therewith a set of audio clips, each audio clip in the set corresponding to a different velocity, wherein the audio device is operable to select an audio clip in dependence on a correspondence between the augmented reality object and an item in the database, and in dependence on a correspondence between a detected velocity of the movement of the feature and a velocity range associated with each item in the database.

The sound may be varied by selecting different audio clips in dependence on a detected velocity of the movement.

In one embodiment, the different audio clips comprise a first audio clip and a second audio clip, and the first audio clip is played when the detected velocity is between a first threshold value and a second threshold value, and the second audio clip is played when the detected velocity is above the second threshold value.

In one embodiment the different audio clips comprise a third audio clip, and the second audio clip is played when the detected velocity is between the second threshold value and a third threshold value and the third audio clip is played when the detected velocity is above the third threshold value.

Preferably, the second audio clip is longer than the first audio clip, and the third audio clip is longer than the second audio clip. A plurality of audio clips associated with the object can be played concurrently.

When one of the audio clips associated with the combination of the augmented reality object and the feature starts playing, a first time delay elapses before another audio clip associated with that combination of the augmented reality object and the feature is permitted to start playing. The first time delay is varied using a random number each time it elapses.

Preferably, the first time delay is less than or equal to the first threshold value. Preferably, one or more of the first, second and third threshold values are varied using a random number.

In one embodiment, the first audio clip is played if the detected velocity is between the first threshold and the second threshold for at least a first time period.

In one embodiment, the second audio clip is played if the detected velocity is between the first threshold and the second threshold for at least a second time period.

In one embodiment, the sound is played to the user with a time offset at one ear compared with the other ear to simulate the origin of the sound being at the object to which the sound corresponds.

In one embodiment, the sound is played using two mono channels, one to each ear, each playing the same sound with a different time offset.

In another embodiment, the sound is played as a stereo audio clip which has been recorded in such a way as to simulate having originated from the object to which the sound corresponds.

In one embodiment, audio clips are generated in advance by sampling, at locations corresponding to a user's ears, the detected sound made when a user, while wearing or holding the augmented reality object, moves in a particular way and at a particular rate of movement.

Alternatively, the different audio clips may be computer generated.

According to another aspect of the present invention, there is provided a method of providing a user with a facility to try out virtual clothing or accessories, the method comprising: imaging a scene containing the user; detecting the motion of a feature within the scene; displaying an image of the scene in which an augmented reality object is superimposed; and playing a sound associated with the augmented reality object, wherein the sound is varied in accordance with the detected motion.

### Brief Description of the Drawings

Embodiments of the present invention will now be described with reference to the following drawings, in which:
Figure 1 schematically illustrates an augmented reality system according to an embodiment of the present invention;
Figure 2 schematically illustrates the augmented reality system of Figure 1 in more detail
Figure 3 schematically illustrates a face tracking technique;
Figure 4 schematically illustrates a marker tracking technique;
Figures 5A and 5B schematically illustrate a skeleton tracking technique;
Figure 6 is a schematic flow diagram of the sampling, tracking and augmented reality playback method according to an embodiment of the present invention; and
Figure 7A to 7C schematically illustrate three examples of audio clip playback in response to detected velocity.

### Description of the Example Embodiments

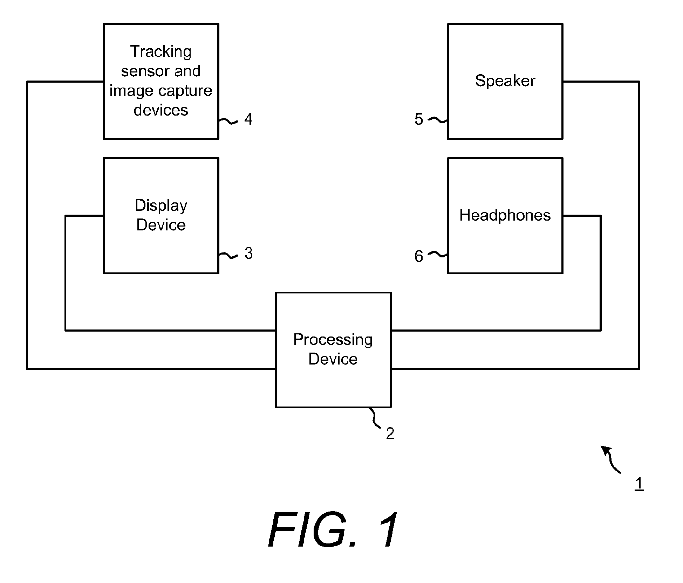

Referring to Figure 1, an augmented reality system 1 is schematically illustrated. The augmented reality system 1 comprises a processing device 2, a display device 3, a tracking sensor and image capture device 4 and audio output device 5, 6 (speaker and headphones respectively). The image capture component of the device 4 captures an image of a scene containing a user. The tracking sensor component of the device 4 is used to track the location of one or more features in the scene. The features might for example include the user's head, one or more of his joints, or a handheld or worn trackable marker. The tracking sensor component and the image capture component of the device 4 may be the same, in particular where image processing of a captured image is to be used to track the feature. Alternatively, if tracking is to be carried out by depth processing for example, then a separate component may be required. For example, a depth camera device may be provided which captures both a colour image and a depth (distance from the depth camera) of the scene. The processing device 2 is used to determine a location of the features from the tracking sensor and image capture device 4. Suitable techniques for such feature tracking are well known to the person skilled in the art. The processing device 2 is operable to superimpose an augmented reality object onto the captured image. The location and orientation at which the augmented reality image is superimposed is determined by tracking the position of the user in the scene in accordance with known methods. The augmented reality object might be clothing, such as trousers or a coat, a wearable accessory, such as earrings, or a held accessory such as a handbag. Once the augmented reality object has been superimposed on the captured image, it is displayed to the user via the display device 3. In parallel, the processing device 2 is operable to identify a rate of movement (velocity) of one or more of the tracked features, and to cause the playback of sound via the audio output device 5 in dependence on the detected velocity. The sound played on one of the audio output device 5 (speaker) and 6 (headphones) is a sound associated with the augmented reality object which is being superimposed on the captured image. Preferably the operations are conducted in real time, or near real time.

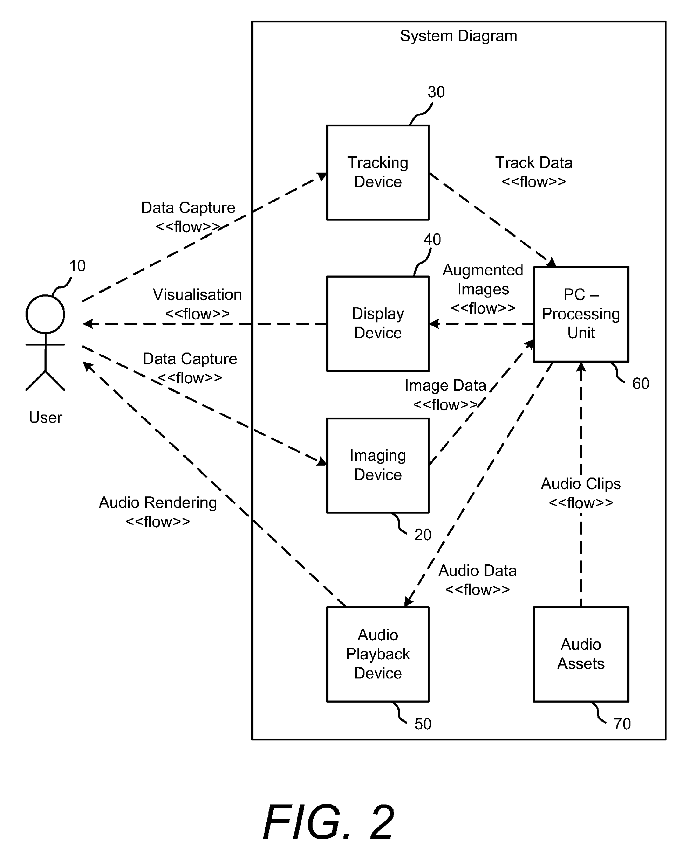

Referring now to Figure 2, a detailed view of the system of Figure 1 is schematically illustrated. The system is shown to comprise an imaging device 20 for capturing an image of a scene containing a user 10. A tracking device 30 is provided, in this case a depth camera, for capturing colour (image) data and depth information of the user 10. Both the imaging device 20 and the tracking device 30 output their respective image and depth information to a PC processing unit 60. The PC processing unit 60 also receives audio clips from an audio assets database 70. The database 70 stores information regarding a plurality of items of clothing or accessories, including visual representations for superimposing on captured images of the user 10 and audio clips associated with the items of clothing or accessories. A plurality of audio clips are associated with at least some of the items, each audio clip associated with a particular item relating to a different movement speed. It will be appreciated that a given item of clothing or accessory may exhibit different sound properties (e.g. volume, pitch or other characteristic) when the user moves in a particular way or at a particular speed. For example, if a user is wearing a virtual jacket then when he moves his arms a noise which would result from friction between the arms and the body of a "real" jacket should be played. Faster movement of the arms should result in a different sound profile, for example a higher volume or increased concentration of noise. By detecting the speed at which certain features of the image move, it is possible to select an audio clip corresponding to a given amount of movement.

In table 1 below, a set of example audio files associated with a "silk shirt" are identified. It can be seen that four velocity bands are defined. The first band (V < Th₁) corresponds to zero or low velocity motion, and no sound is played when the detected motion falls within this band. The second velocity band (Th₁ ≤ V ≤ Th₂) defines a velocity range within which the "Silk Shirt 1" audio clip is played. This clip has a duration of 0.25s. The third velocity band (Th₂ ≤ V ≤ Th₃) defines a velocity range within which the "Silk Shirt 2" audio clip is played. This clip has a duration of 0.50s. The fourth velocity band (Th₃ ≤ V) defines a velocity range (unbounded at its upper end) within which the "Silk Shirt 3" audio clip is played. This clip has a duration of 0.75s.

**Table 1**

| Velocity | V < Th₁ | Th₁ ≤ V ≤ Th₂ | Th₂ ≤ V ≤ Th₃ | Th₃ ≤ V |
|---|---|---|---|---|
| ID | No sound | Silk Shirt 1 | Silk Shirt 2 | Silk Shirt 3 |
| Duration | - | 0.25s | 0.5s | 0.75s |

The threshold values Th₁, Th₂, Th₃ may be fixed values (for a particular item of clothing or accessory) or may be modulated with a pseudo random number to vary the thresholds by a small amount. It has been found that a small degree of random variation improves the richness and realism of the outputted sound. The threshold values may be represented in terms of linear velocity (e.g. m/s) or angular velocity (degrees/s). The

The sound clip may be triggered only if the detected velocity remains within or greater than a given range for a predetermined minimum period. The predetermined minimum period may for example be 0.50s. This reduces the occurrence of spurious noise generation.

When an appropriate sound clip has been selected by the processing unit 60, the processing unit superimposes the augmented reality object onto the captured image and outputs the augmented image to the display device 40 for presentation to the user. In parallel with this, the selected sound clip is provided to the audio playback device 50 for playback to the user. In this way, the user is presented with an augmented reality item which tracks his location, posture and movements, and which is accompanied by sound effects which correspond to the augmented reality item and the movements made by the user.

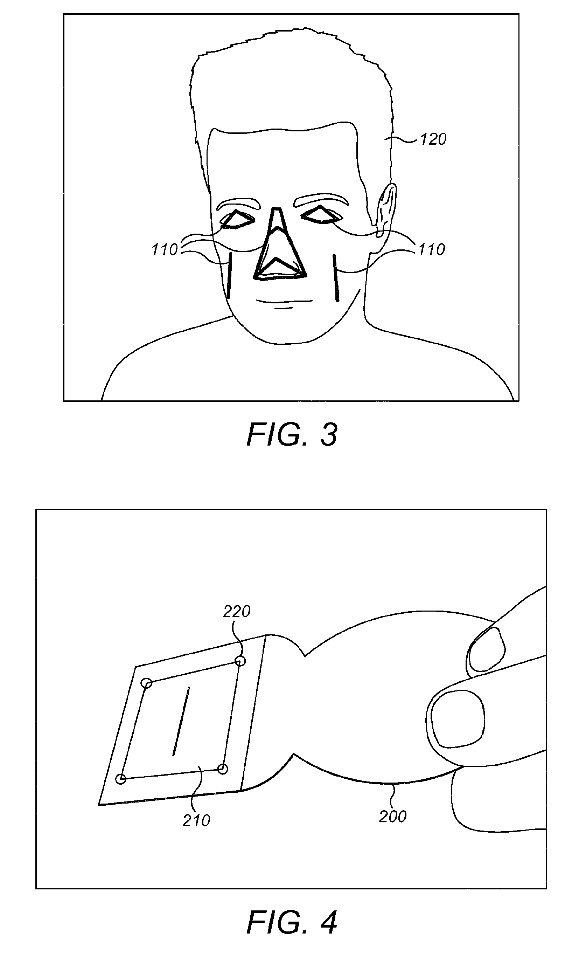

Referring to Figure 3, a face tracking technique is shown in which known techniques are used to isolate and track the position of a user's facial features 110 (in this case nose, eyes and cheeks). An X, Y, Z alignment axis and x, y, z position of the face can be identified. Transformations (rotation of the alignment axis or translation of the position of the face) can be detected between image frames and used to determine an amount of movement (rotational or linear) and thus a velocity for selecting a suitable audio clip. An example application might be for an augmented reality item of a set of earrings which give rise to a sound when the head is shaken, nodded or moved. The amount of motion caused by these actions can be used to select an audio clip, such that a more vigorous motion causes a different clip to be played than a gentle motion.

Referring to Figure 4, a paddle 200 is shown on which is provided a tracking marker 210 which is easily identifiable by an imaging device and image processor. The corners 220 of the tracking marker back be tracked (x, y locations in image space), and used to determine an X, Y, Z alignment axis and x, y, z location for the marker. The location and alignment information can then be used to control where an augmented reality item is to be superimposed in a captured image. In this way, a user is able to control where an item, such as an earring, a handbag or even an item of clothing on a virtual hanger, should be superimposed onto a displayed image of the user. It will be appreciated that the position and orientation of the marker can be tracked from frame to frame and used to determine the linear and/or rotational velocity of the paddle. If the velocity of the paddle changes, a different (or additional) audio clip will be played, giving rise to a change in the sound heard by the user.

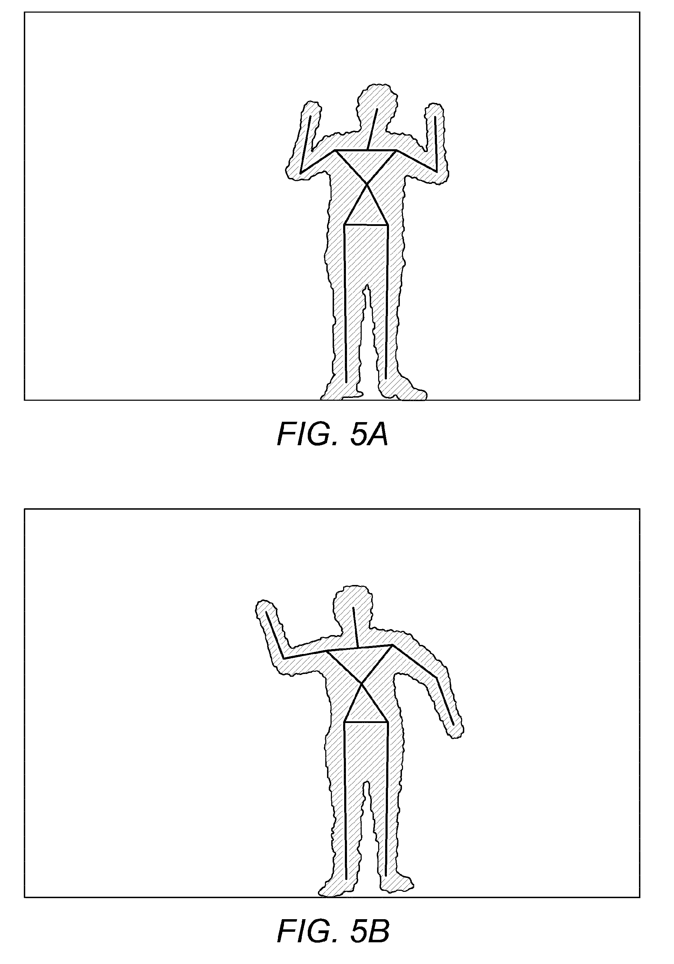

Referring to Figures 5A and 5B, a skeleton tracking technique is schematically illustrated. It can be seen in both Figure 5A and Figure 5B that the position and posture of a user (visible in silhouette) is represented by a skeleton model made up of a number of node points. The node points in this case are head, neck, left hand, left elbow, left shoulder, right shoulder, right elbow, right hand, left hip, left knee, left foot, right hip, right knee and right foot. These node points, mainly corresponding to joints of the human body are tracked using a depth sensor and optionally colour information (from a depth camera). These techniques are well know to the person skilled in the art, and are employed by the XBOX Kinect sensor for example. Each node has an associated 3D position indicated by x, y, z coordinates. Vectors between two nodes can be readily calculated, and angles between limb components (for example upper and lower arm) can be easily determined. It can be seen that the user has moved between the screen capture of Figure 5A and the screen capture of Figure 5B, particularly in relation to the user's arms. The movement amount can be used to calculate a velocity which is compared to the thresholds (e.g. indicated in Table 1) to select an appropriate audio clip for playback. In addition to velocity, either the selection of or characteristics of the sound clips may be determined partly based on the proximity of nodes (or vectors joining nodes) at the time a velocity detection is made. For example, if a given velocity for the upper arm vector is detected while the upper arm is relatively close to the body then this may result in a louder playback than if the upper arm is relatively further away from the body. The velocity of the nodes can either be determined absolutely, or with reference to other nodes within the skeleton model.

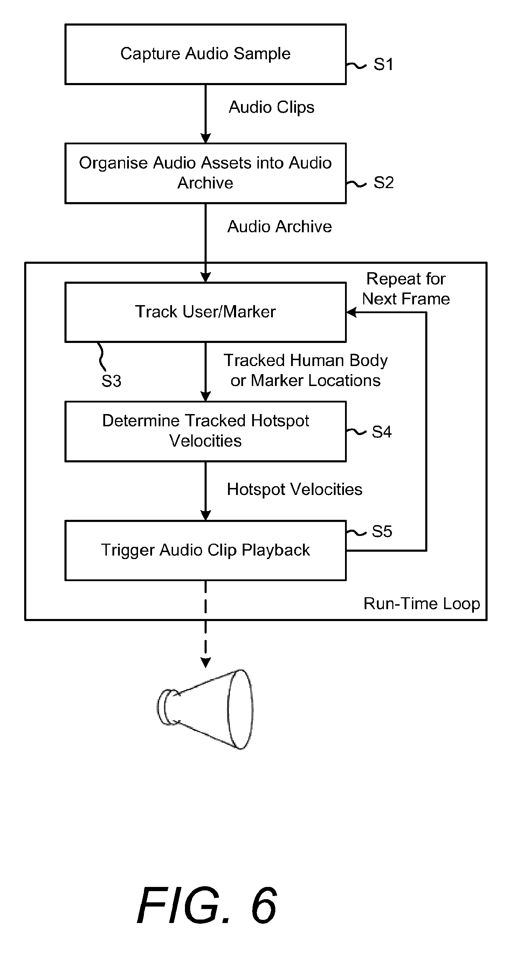

Figure 6 schematically illustrates the above process. Firstly, at a step S1, an audio sample is captured. For example, a user may wear an item of clothing and microphones proximate to their left and right ears. The user then moves while wearing the clothing and the microphones pick up the sound corresponding to the movement. The movements made by the user may be categorised as corresponding to particular velocities (for example those indicated in Table 1). A series of sounds, movements and items of clothing or accessories may be recorded, measured and categorised. In this way, at a step S2 audio assets may be organised to form an audio archive (database). The audio archive is then made available to a run-time loop which comprises steps S3 to S5. At the step S3, the user or a marker moved by the user is tracked. The tracked human body or marker locations are then passed to a step S4, where tracked hotspots (e.g. nodes or markers) are determined. The hotspot velocities are passed to the step S5, where audio clip playback is triggered based on the determined hotspot velocities. The step S5 then loops back to the step S3.

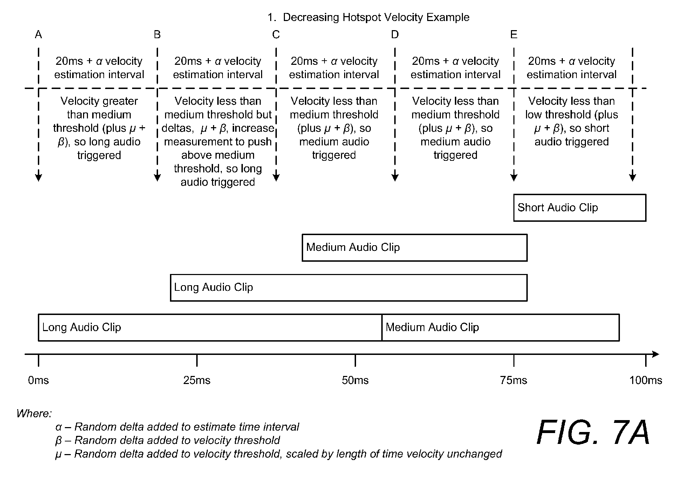

Figure 7A schematically illustrates an example of the above in which the hotspot velocity is decreased. Four audio slots are provided, permitting simultaneous playback of up to four audio clips. At a time A, the velocity is determined to be greater than a medium threshold (plus µ+ β), so the long audio (0.75s) is triggered. At a time B, which is 20ms + α after the time A, the velocity is determined to be less than the medium threshold but deltas, µ + β, increase the measurement to push it above the medium threshold, so the long audio (0.75s) is triggered in the second audio slot. At a time C, the determined velocity is less than medium threshold (plus µ + β), so the medium audio (0.5s) is triggered in the third audio slot. At a time D, the determined velocity is less than the medium threshold (plus µ+ β), so the medium audio clip (0.5s) is triggered in the first audio slot (the previous long audio clip having completed). At a time E, the determined velocity is less than the low threshold (plus µ+ β), so the short audio is triggered (0.25s) in the fourth audio slot. In this example:
*α = Random delta added to estimation time interval*
*β = Random delta added to velocity threshold*
*µ = Random delta added to velocity threshold, scaled by dength of time velocity unchanged*

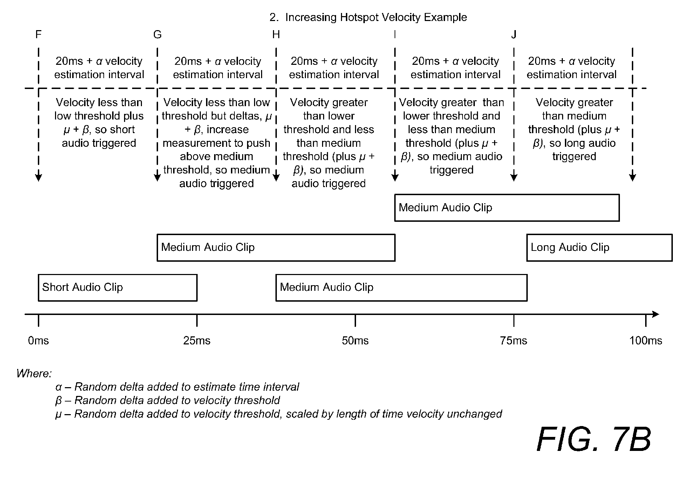

Figure 7B schematically illustrates an example of the above in which the hotspot velocity is increasing. At a time F, the determined velocity is less than the low threshold plus , µ +β and so the short audio clip is triggered in the first time slot. At a time G, the determined velocity is less than the low threshold but deltas, µ +β, increase measurement to push above medium threshold, so the medium audio is triggered in the second audio slot. At a time H, the determined velocity is greater than the lower threshold and less than medium threshold (plus µ + β), so the medium audio is triggered in the first audio slot. At a time I, the determined velocity is greater than the lower threshold and less than medium threshold (plus µ + β), so the medium audio is triggered in the third time slot (the previous clip in the first time slot having ended). At a time J, the determined velocity is greater than the medium threshold (plus µ+ β), so the long audio is Triggered in the second audio slot.

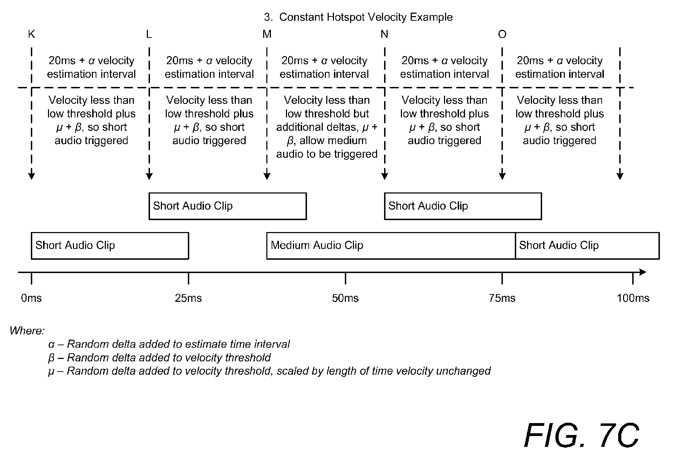

Figure 7C schematically illustrates an example of the above in which the hotspot velocity is substantially constant. At a time K, the determined velocity is less than the low threshold plus µ + β, so the short audio is triggered in the first audio slot. At a time L, the determined velocity is less than the low threshold plus µ + β so the short audio is triggered in the second audio slot. At a time M, the determined velocity is less than the low threshold but additional deltas, µ + β, allow the medium audio to be triggered in the first audio slot. At a time N, the determined velocity is less than the low threshold plus µ + β, so the short audio is triggered in the second audio slot. At a time O, the determined velocity is less than the low threshold plus µ + β, so the short audio is triggered in the first time slot.

### Alternative Embodiments

It will be understood that embodiments of the present invention are described herein by way of example only, and that various changes and modifications may be made without departing from the scope of the invention.

For example, in the embodiment described above, the database stores a plurality (also referred to as a set) of audio files associated with a particular item of clothing or accessory, with each audio clip in a set relating to a different velocity band, whereby one of the audio clips in the set is selected based on a determined amount of motion. Additionally or alternatively, the database can store a plurality of audio files associated with a particular augmented reality item, wherein each audio file in a set is associated with a respective characteristic or trait of the augmented reality item. For example, a set of audio files can be provided to simulate different materials, textures, densities, thicknesses, etc. of a particular item of clothing or accessory, or of portions of the item of clothing or accessory. As yet a further alternative, the augmented reality items may be associated with one or more characteristics or traits, and the system can store a set of audio files associated with a respective characteristic or trait. In this way, the system can receive user input identifying a respective characteristic or trait of a selected augmented reality item to be superimposed in the captured image, and in response, select an audio clip for output based on the user input and selection.

As yet a further modification, the system can be adapted to dynamically vary characteristics of the selected audio clip, such as frequency, pitch, tempo, volume, etc., based on the detected motion.

In the embodiment described above, the system comprises a processing device configured to implement embodiments of the present invention as discussed herein. As those skilled in the art will appreciate, the system may store a plurality of application modules (also referred to as computer programs or software) in memory, which when executed, cause the system to become configured as discussed herein. Additionally, the software may be stored in a computer program product and loaded into the system using any known instrument, such as removable storage disk or drive, hard disk drive, or communication interface, to provide some examples.

Alternative embodiments may be envisaged, which nevertheless fall within the scope of the following claims.

## Claims

1. An augmented reality system for providing a user with a facility to try out virtual clothing or accessories, the system comprising:
a database storing data defining at least one augmented reality object and a set of associated audio clips, each audio clip in the set corresponding to a different characteristic, trait or parameter of an associated augmented reality object;
camera means for imaging a scene containing the user;
means for detecting the motion of a feature within the scene;
means for displaying an image of the scene in which an augmented reality object is superimposed;
audio processing means for selecting at least one audio clip associated with the superimposed augmented reality object; and
means for outputting a sound associated with the augmented reality object,
wherein the sound is varied in accordance with the detected motion.

2. An augmented reality system according to claim 1, further comprising means for receiving user input selection of an augmented reality object to be superimposed, and at least one associated characteristic, trait or parameter of the augmented reality object.

3. An augmented reality system according to claim 2, wherein the audio processing means is operable to select at least one audio clip in dependence on the user input selection.

4. An augmented reality system according to claim 3, wherein the audio processing means is further operable to vary the selected at least one audio clip in accordance with the detected motion.

5. An augmented reality system according to any preceding claim, wherein each audio clip in the set corresponds to a different parameter of detected motion.

6. An augmented reality system according to claim 5, wherein the audio processing means is operable to select at least one audio clip in dependence on a correspondence between a detected velocity of the movement of the feature and a velocity range associated with each object in the database.

7. An augmented reality system according to claim 5, wherein the audio processing means is operable to vary the sound by selecting different audio clips in dependence on a detected velocity of the movement.

8. An augmented reality system according to claim 6, wherein the different audio clips comprise a first audio clip and a second audio clip, and wherein the first audio clip is played when the detected velocity is between a first threshold value and a second threshold value, and the second audio clip is played when the detected velocity is above the second threshold value.

9. An augmented reality system according to claim 8, wherein the second audio clip is longer than the first audio clip.

10. An augmented reality system according to claim 7, wherein a plurality of audio clips associated with the object can be played concurrently.

11. An augmented reality system according to claim 10, wherein when one of the audio clips associated with the combination of the augmented reality object and the feature starts playing, a first time delay elapses before another audio clip associated with that combination of the augmented reality object and the feature is permitted to start playing.

12. An augmented reality system according to claim 11, wherein the first time delay is varied using a random number each time it elapses.

13. An augmented reality system according to claim 8, wherein one or more of the threshold values are varied using a random number.

14. An augmented reality system according to claim 7, wherein the first audio clip is played if the detected velocity is between the first threshold and the second threshold for at least a first time period.

15. An augmented reality system according to any preceding claim, wherein the feature is a trackable marker moveable by the user, and the augmented reality object is superimposed at the position of the trackable marker.

16. An augmented reality system according to claim 15, wherein the sound is played at a volume which is varied in dependence on a distance between the trackable marker and the user's head.

17. An augmented reality system according to any preceding claim, wherein the feature is one or a group of node points within a skeleton model representing at least part of the user's body, and wherein the augmented reality object is an item of clothing superimposed over the user's body.

18. An augmented reality system according to claim 17, wherein the detected motion comprises one or both of the rotational and linear velocity of one node point with respect to another node point.

19. An augmented reality system according to claim 17 or 18, wherein the sound is varied in dependence on the proximity of the node point feature to another node point, or to a vector joining two node points.

20. An augmented reality system according to any one of claims 17 to 19, wherein a first vector joins a first node and a second node within the skeleton model and a second vector joins the second node and a third node within the skeleton model, and wherein the detected movement comprises a rotational velocity defined by a rate of change of the angle between the first and second vectors.

21. An augmented reality system according to claim 20, wherein the volume of the sound is higher when the angle between the first and second vectors is less than a predetermined value than when the angle between the first and second vectors is greater than the predetermined value.

22. An augmented reality system according to claim 18, wherein a first vector joins a first node and a second node within the skeleton model and a second vector joins the second node and a third node within the skeleton model, and wherein the sound is played when both the angle between the first and second vectors is greater than a predetermined value and the detected movement is above a predetermined amount.

23. An augmented reality system according to any preceding claim, wherein the sound is played to the user with a time offset at one ear compared with the other ear to simulate the origin of the sound being at the object to which the sound corresponds.

24. A method of providing a user with a facility to try out virtual clothing or accessories, the method comprising:
storing data defining at least one augmented reality object and a set of associated audio clips, each audio clip in the set corresponding to a different characteristic, trait or parameter of an associated augmented reality object;
imaging a scene containing the user;
detecting the motion of a feature within the scene;
displaying an image of the scene in which an augmented reality object is superimposed;
selecting at least one audio clip associated with the superimposed augmented reality object; and
outputting a sound associated with the augmented reality object, wherein the sound is varied in accordance with the detected motion.

25. A computer-readable medium comprising computer-executable instructions, that when executed perform a method of claim 24.
